## Europäisches Patentamt

(19) **European Patent Office**

**Office européen des brevets**

(11) Numéro de publication: **0 079 282**
**B1**

# FASCICULE DE BREVET EUROPÉEN

(45) Date de publication du fascicule du brevet:
**13.08.86**

(51) Int. Cl.⁴: **G 01 R 27/26**

(21) Numéro de dépôt: **82402039.0**

(22) Date de dépôt: **05.11.82**

(54) **Procédé et dispositif de mesure rapide d'énergie et application à la mesure de l'énergie fournie par un laser impulsionnel.**

(30) Priorité: **10.11.81 FR 8121024**

(43) Date de publication de la demande:
**18.05.83 Bulletin 83/20**

(45) Mention de la délivrance du brevet:
**13.08.86 Bulletin 86/33**

(84) Etats contractants désignés:
**BE DE GB NL**

(56) Documents cité:
**GB-A-1 312 879**
**US-A-4 084 101**
**US-A-4 208 624**

**JOURNAL OF PHYSICS C: SOLID STATE PHYSICS, vol. 3, 1970, pages 2207-2215, (GB); E.A.NICOL et al.: "The dielectric properties of simple liquids at high frequencies"**
**PATENTS ABSTRACTS OF JAPAN, vol. 5, no. 13, 27 janvier 1981, page P-46 685;**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Anitoff, Oleg, 16 ter, rue de l'Eglise, F-91570 Bievres (FR)**

(74) Mandataire: **Mongrédien, André, c/o BREVATOME 25, rue de Ponthieu, F-75008 Paris (FR)**

## Description

La présente invention a pour objet un procédé et un dispositif de mesure rapide d'énergie. Elle permet notamment de mesurer de façon répétitive l'énergie fournie par un laser impulsionnel, dans un domaine spectral très vaste allant des hyperfréquences à l'ultraviolet.

Les dispositifs ou capteurs utilisés actuellement pour la mesure des énergies fournies notamment par un faisceau laser dérivent directement des capteurs utilisés en spectrométrie infra-rouge dont on a optimisé les caractéristiques. Ces capteurs optimisés, non conçus initialement pour ce type d'application, ne représentent pas nécessairement le meilleur choix possible pour ce type d'application.

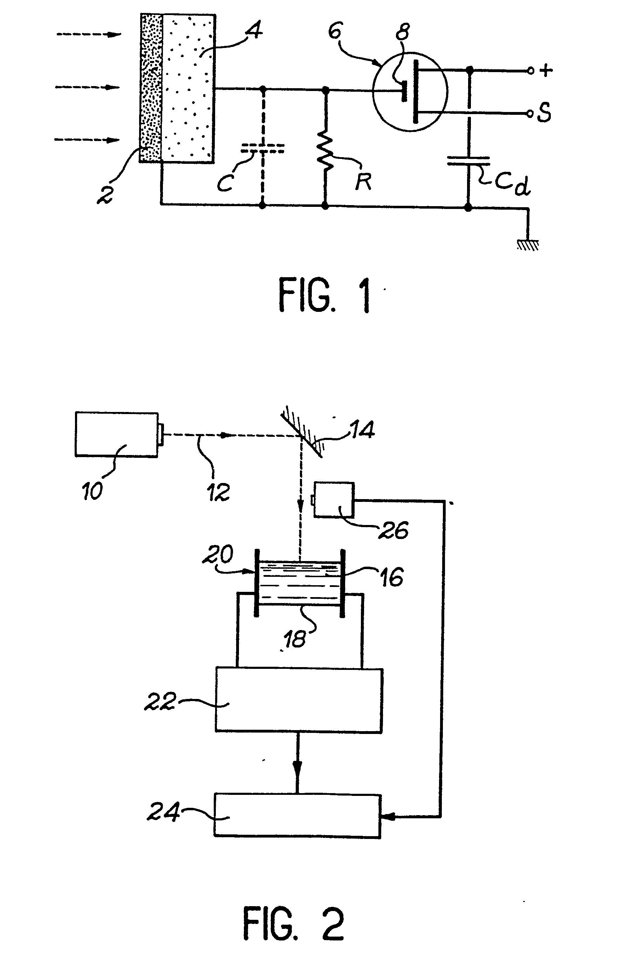

Ces capteurs sont essentiellement des capteurs pyroélectriques ou éventuellement des bolomètres comprenant trois parties distinctes. Ces capteurs, en se référant à la figure 1, comprennent une mince couche d'un matériau absorbant 2 dont le spectre d'absorption doit être aussi vaste que possible, c'est-a-dire qu il doit absorber l'énergie d'une impulsion laser correspondant à une longueur d'onde allant de l'infra-rouge plus ou moins lointain à l'ultra-violet. Cette couche mince en matériau absorbant 2 convertit l'énergie de l'impulsion laser en chaleur.

Bien que le temps de conversion de l'énergie des photons laser en énergie thermique soit très court, en général de l'ordre de la picoseconde, la couche mince en matériau absorbant 2 doit, par sa nature même, être physiquement séparée de la seconde partie 4 constituant ces capteurs. Cette séparation physique entraîne une première limitation du temps de réponse du capteur liée au temps de transfert $T_1$ de l'énergie thermique fournie par la couche mince de matériau absorbant 2 à la seconde partie 4 du capteur.

Cette seconde partie 4 permet de convertir l'énergie thermique en un signal électrique qui lui est proportionnel. Cette seconde partie est généralement, mais non exclusivement, constituée d'une céramique pyroélectrique aux bornes de laquelle apparaît une différence de potentiel, en circuit ouvert, proportionnelle à son échauffement. Cette différence de potentiel est alors transmise à un appareil de mesure électrique.

Etant donné que la céramique pyroélectrique est un dispositif à très haute impédance interne, son impédance de sortie doit être abaissée par l'intermediaire d'un circuit abaisseur d'impédance. Ce circuit abaisseur d'impédance est généralement constitué d'un transistor MOS 6. pour éviter la capture de signaux électriques parasites, le transistor MOS doit être disposé aussi prês que possible de la céramique pyroélectrique et doit donc être intégré au capteur. Ce transistor MOS constitue la troisième partie du capteur. La résistance R reliée aux bornes de la céramique pyroélectrique 4 représente la résistance de fuite de la grille 8 du transistor et le condensateur $C_d$ connecté au drain et à la grille du transistor par l'intermédiaire de la résistance R représente le condensateur de découplage de la source d'alimentation du transistor. Le signal de mesure est recueilli en S.

De plus, du fait que la céramique pyroélectrique 4 est un dispositif à très haute impédance, celle-ci présente malheureusement une capacité parallèle élevée. Cette capacité élevée, représentée sur la figure 1 en pointillé et portant la référence C, introduit une constante de temps $T_2$ beaucoup plus élevée que le temps de transfert $T_1$ de l'énergie thermique de la couche mince en matériau absorbant 2 à la céramique pyroélectrique 4. En effet, cette constante de temps varie de 10 à 30 ms tandis que le temps de transfert $T_1$ varie de 1 µs à 1 ms. En conséquence, la sensibilité élevée d'un tel capteur ne peut être obtenue qu'auprès d'une constante de temps considérable, ce qui limite la fréquence de répétition maximale des mesures de l'énergie fournie notamment par un faisceau laser à 100 Hz. Ceci est nettement insuffisant pour mesurer de façon répétitive l'énergie fournie par un laser impulsionnel moderne atteignant une fréquence de plusieurs kHz.

Il est à noter que l'intervalle de temps séparant deux mesures successives n'a rien a voir avec la durée minimale d'une impulsion laser que peut détecter le capteur. Cette dernière est égale au temps de conversion de l'énergie des photons en chaleur, c'est-à-dire de l'ordre de la picoseconde.

Par ailleurs, un tel capteur possède une reponse spectrale limitée dans l'infra-rouge lointain. De plus, la structure complexe de ce capteur conduit à un prix de revient élevé. Enfin, l'absorption d'énergie se fait dans un volume très faible qui est celui de la couche en matériau absorbant. En conséquence, la densité d'énergie fournie par un faisceau laser y est donc élevée, ce qui conduit à une détérioration rapide de la couche en matériau absorbant, nécessitant périodiquement une réegéneration de celle-ci par application d'un enduit sur la surface de la couche en matériau absorbant. Cette régéneration de la couche en matériau absorbant nécessite ensuite un ré-étalonnage complet du capteur. Par ailleurs, lorsque la densité d'énergie laser est très élevée, il peut s'ensuivre une destruction complète du capteur nécessitant un remplacement coûteux de celui-ci.

On connaît aussi des dispositifs utilisés pour détecter des radiations comportant un matériau présentant un moment dipolaire et recevant un faisceau de particules. Ce matériau, par absorption de l'énergie du faisceau de particules, subit une élévation de température entraînant la circulation d'un courant qui peut se traduire par une tension aux bornes du détecteur correspondant. Ces dispositifs de détection sont notamment décrits dans le document de brevet GB-A-1 312 879.

L'invention a pour objet un procédé et un dispositif de mesure rapide d'énergie permettant de remédier à ces inconvénients. Elle permet notamment d'effectuer des mesures répétitives de

**0 079 282**

l'énergie fournie par un faisceau laser impulsionnel à une fréquence de répétition au moins 1 000 fois plus grande que celle effectuée avec les dispositifs de l'art antérieur et de mesurer des énergies au moins 10 fois plus grandes que celles pouvant être mesurées par le dispositif de l'art antérieur. De plus, les mesures des énergies peuvent être effectuées dans un domaine spectral allant des hyperfréquences à l'ultraviolet.

De façon plus précise, l'invention a pour objet un procédé de mesure de l'énergie fournie par un faisceau de particules et notamment de l'énergie fournie par un faisceau laser impulsionnel, consistant à envoyer ce faisceau de particules sur un matériau présentant un moment dipolaire électrique élevé, ce matériau étant capable d'absorber l'énergie fournie par ce faisceau de particules, l'interaction dudit faisceau et du matériau conduisant à une élévation de température du matériau, proportionnelle à l'énergie absorbée, caractérisé en ce que l'on place le matériau, présentant des dipôles pouvant s'orienter librement, entre les deux armatures d'un condensateur d'accord en fréquence d'un oscillateur et en ce que l'on mesure la variation de la fréquence d'oscillation de cet oscillateur, cette variation de la fréquence étant proportionnelle à la variation de la constante diélectrique du matériau lors de l'interaction du faisceau de particules et du matériau, la durée de la mesure d'énergie étant une microseconde.

Il est à noter que la dépendance de la constante diélectrique des matériaux vis-à-vis de la température est bien connue. Cependant, étant donné les faibles variations de cette constante diélectrique et en l'absence d'un procédé permettant une mesure rapide de ces faibles variations, cette propriété n'avait jusqu'à présent pas été envisagée comme moyen pour convertir un signal thermique en un signal électrique.

Selon une autre caractéristique du procédé de l'invention, le matériau est un fluide, contenu dans une cellule; ce fluide est notamment un liquide. En cas de dommage causé par une impulsion laser trop puissante, la régénération de la cellule se fait en changeant le liquide par une simple vidange de la cellule et ceci sans qu'il soit nécessaire de procéder à un ré-étalonnage, ce qui n'etait pas le cas dans l'art antérieur.

Selon une autre caractéristique preférée du procédé de l'invention, le matériau n'est ni polymérisable ni tautomérisable.

Selon une autre caracteristique preferée du procédé de l'invention, le matériau est choisi dans le groupe comprenant les dérivés nitrés ou halogénés non symétriques des alcanes, ayant au moins trois atomes de carbone, ou des hydrocarbures aromatiques, les composés hétérocycliques non symétriques oxygénés ou azotés, les amines tertiaires et les cétones dont les carbones en $\alpha$ sont substitués par des radicaux alkyle.

De préférence, le matériau est choisi dans le groupe comprenant le nitrobenzène et le pentafluoronitrobenzène.

Selon une autre caractéristique préférée du procédé de l'invention, le matériau est formé d'une pluralité de substances n'interagissant pas entre elles et dont les domaines d'absorption d'énergie sont complémentaires. L'utilisation d'un tel matériau permet de mesurer l'énergie fournie par un faisceau laser dans un domaine spectral très vaste allant des hyperfréquences à l'ultraviolet, ce qui n'était pas envisageable dans l'art anterieur.

Selon un mode de mise en oeuvre préfére du procédé de l'invention, on place le matériau entre les deux armatures du condensateur d'accord en fréquence d'un oscillateur notamment haute fréquence et l'on mesure la variation de la fréquence d'oscillation de cet oscillateur, cette variation de la fréquence étant proportionnelle à la variation de la constante diélectrique du matériau.

L'invention a aussi pour objet un dispositif permettant la mesure de l'énergie fournie par un faisceau de particules et notamment fournie par un faisceau laser, comprenant un matériau présentant un moment dipolaire élevé, ce matériau étant capable d'absorber l'énergie fournie par le faisceau de particules, l'interaction dudit faisceau et du matériau conduisant à une élévation de température du matériau, proportionnelle à l'énergie absorbée, caractérisé en ce qu'il comprend un condensateur d'accord en fréquence d'un oscillateur comportant deux armatures entre lesquelles est placé le matériau, celui-ci présentant des dipôles pouvant s'orienter librement, et des moyens permettant de mesurer la variation de la fréquence d'oscillation dudit oscillateur qui est proportionelle à la variation de la constante diélectrique du matériau lors de l'interaction du faisceau de particules et dudit matériau, la durée d'une mesure de l'énergie étant une microseconde.

Un tel dispositif permet en particulier de mesurer l'énergie à chaque tir laser d'un laser dont la fréquence de récurrence est de plusieurs kHz, ce qui n'était pas possible avec les capteurs de l'art antérieur.

D'autres caractéristiques et avantages de l'invention ressortiront mieux de la description qui suit, donnée à titre illustratif mais nullement limitatif, en référence aux figures annexées, sur lesquelles:

- la figure 1, déjà décrite, représente schématiquement un dispositif de mesure de l'énergie, fournie notamment par un faisceau laser, de l'art antérieur, et,

- la figure 2 représente schématiquement un dispositif de mesure de l'énergie, fournie notamment par un faisceau laser, conformément à l'invention.

Le procédé et le dispositif de l'invention vont être décrits pour la mesure de l'énergie fournie par un faisceau laser impulsionnel, mais bien entendu l'utilisation de ce procédé et de ce dispositif ne sont pas limités à cette seule application. En effet, l'invention est applicable notamment à tout type de faisceau de particules.

Comme schématisé sur la figure 2, un laser 10 émet un faisceau 12 que l'on envoie, par exemple au moyen d'um miroir 14 sur un matériau 16 capable d'absorber l'energie fournie par le faisceau 12. L'interaction du faisceau laser et du matériau conduit à une élévation de température au sein du matériau qui est proportionnelle à l'énergie absorbée. Cette élévation de température entraîne une variation de la constante diélectrique du matériau que l'on va mesurer. La température au sein du matériau peut varier de 4 à 300°R.

La dépendance de la constante diélectrique d'un matériau vis-à-vis de la température est essentiellement liée à l'influence de la température sur l'orientation moyenne des dipôles de ce matériau. La variation de la constante diélectrique ε en fonction de la température T est régie par l'équation

$$\frac{d\varepsilon}{dT} = -\frac{4\pi N\ \mu^2}{3\ k\ T^2}$$

dans laquelle μ représente le moment dipolaire du matériau, k représente la constante de Boltzman et N le nombre d'Avogadro. Cette formule implique donc que le matériau, pour être un bon convertisseur thermoélectrique, doit avoir un moment dipolaire μ élevé, et que ses dipôles puissent s'orienter librement. Ce matériau peut donc être par exemple un fluide et notamment un liquide, mais ceci n'est pas obligatoire. En effet, certains solides possèdent dans une certaine zone de température une phase dans laquelle certains dipôles gardent une liberte partielle. Dans le cas de l'utilisation d'un matériau fluide, ce dernier devra etre placé par exemple dans une cellule étanche 18, comme représenté sur la figure 2.

Par ailleurs, afin de mesurer rapidement l'énergie fournie notamment par le faisceau laser de façon fiable, le coefficient de température de la constante diélectrque du matériau

$$(\frac{4\pi N}{3k}\ \mu^2)\ ,$$

c'est-à-dire en fait du moment dipolaire μ, doit être aussi stable que possible. Or, ce coefficient de temperature, pour certains matériaux, notamment liquides, evolue de façon complexe en raison de la possibilité de polymérisation ou de tautomérisation de la part de ces matériaux. On peut citer par exemple comme de tels matériaux, les alcools qui ont un comportement diélectrique complexe, étant donne la formation de liaisons hydrogène entre les différentes molécules d'alcool. Afin d'éviter ce problème, le matériau devra être choisi de façon qu'il ne soit ni polymérisable ni tautomérisable et en particulier de façon qu'il ne puisse pas former de liaisons hydrogène.

Les matériaux absorbants satisfaisant aux différents critères de l'invention sont d'une façon générale les dérivés nitrés ou halogénés des hydrocarbures aromatiques ou des alcanes, ayant au moins trois atomes de carbone, les composés plus légers étant trop volatils. On peut citer comme exemples, les nitrobenzènes, les chlorobenzènes, les bromobenzènes, les iodobenzènes, les nitrotoluènes, les chlorotoluènes, les bromotoluènes, les iodotoluènes, les nitroxylènes, les chloroxylènes, les bromoxylènes, les iodoxylènes, etc..., et les nitropropanes, les chloropropanes, les bromopropanes, les iodopropanes etc... Par ailleurs, ces différents composés ne doivent pas être symétriques afin d'éviter que les dipôles de ces composés ne se compensent. Les composés présentant une compensation interne par symétrie tels que par exemple, le trinito 1, 3, 5 benzène, le tribromo mesitylène, le dinitro 1, 3 propane ne conviennent pas.

La présence de liaisons polaires autre que C-$NO_2$ ou C-X, X représentant 'F, cl, Br ou I, n'est généralement pas souhaitable car les autres liasons polaires telles que C-OH, C-NH donment souvent lieu à des phénomènes de tautomerie ou de liason hydrogène. Cependant la présence de liaisons C=O est envisageable et notamment dans les composés hétérocycliques non symétriques oxydes tels que les quinones ou dans les cétones dont les carbones en α sont encombrés, c'està-dire substitues par des radicaux alkyle. De même la liaison C-N est envisageable notamment dans les composés hétérocycliques non symétriques azotés tels que les pyridimes ou dans les amines tertiaires.

Il est à noter que le matériau doit être capable d'absorber les longueurs d'onde du faisceau laser dont on veut mesurer l'énergie. Les matériaux notamment liquides, présentent trois domaines spectraux d'absorption des photons. Le premier domaine, appelé domaine rotationnel, est lié à la rotation des dipôles des différentes molécules le constituant et est situé dans le domaine des hyperfréquences, domaine qui est inaccessible aux capteurs classiques en raison de la minceur de leur couche absorbante (quelques microns). Le second domaine est un domaine vibrationnel situé dans l'infra-rouge et le troisième domaine est un domaine électronique situé dans le visible ou l'ultra-violet.

Au cas où le domaine d'absorption du matériau utilisé ne recouvre pas le domaine souhaité, il est toujours possible de changer de matériau. Dans le cas d'un matériau liquide, ce changement se fait par une vidange de la cellule 18. Le changement de matériau a l'avantage de se faire simplement et de ne nécessiter aucun ré-étalonnage du dispositif. Par ailleurs, il est toujours possible d'adjoindre à ce matériau une ou plusieurs substances absorbant dans des domaines d'énergie complémentaires, de façon à couvrir quasiment tout le domaine spectral, c'est-à-dire des hyperfréquences à l'ultraviolet. Ces substances, qui prises isolément peuvent être solides ou liquides, devront être choisies de façon qu'elles ne réagissent ni entre elles ni avec le matériau auquel elles sont adjointes, soit par réaction chimique, soit par formation de composes tautomères ou de polymères ce qui serait nuisible à la fiabilite du dispositif ainsi qu'à son temps de réponse. Comme exemple de substances on peut citer les cyanines ou les porphyrines.

Lorsque le matériau est constité d'un matériau principal auquel on a adjoint une ou plusieurs substances, ce matériau doit être homogène. Dans le cas d'un matériau liquide, le liquide principal doit être un liquide polaire, peu visqueux, aprotique, c'est-à-dire non susceptible d'échanger un proton avec les substances qui lui sont adjointes, et non associé. De plus, les substances auxiliaires doivent pouvoir être dissoutes dans le liquide principal, éventuellement après modifications de certaines de leurs caractéristiques afin de rendre cette dissolution possible.

On a dit que l'adjonction d'une ou plusieurs substances à un matériau permettait d'effectuer, dans un vaste domaine spectral, la mesure de l'énergie fournie par un faisceau laser, mais inversement en sélectionnant une ou plusieurs substances de domaines d'absorption très étroites, il est possible de rendre le dispositif sélectif vis-à-vis d'une seule valeur de l'énergie, c'est-à-dire vis-à-vis d'une seule longueur d'onde.

Selon l'invention, la mesure de la variation de la constante diélectrique en fonction de l'élévation de température dudit matériau, résultant de l'interaction du faisceau de particules et du matériau, peut être faite en introduisant ledit matériau entre les armatures du condensateur d'accord en fréquence 20 d'um oscillateur 22 de type classique. La fréquence d'oscillation de cet oscillateur est alors une fonction simple de la constante diélectrique du matériau et, pour de faibles variations de la constante dielectrique, la variation de la fréquence d'oscillation est proportionnelle à la variation de la constante diélectrique. Le coefficient de proportionnalité est généralement compris entre 0,1 et 0,5. En conséquence, la mesure de l'énergie fournie notamment par un faisceau laser impulsionnel est effectuée en mesurant les variations de la fréquence d'oscillation de cet oscillateur.

La mesure de la fréquence d'oscillation de cet oscillateur 22 peut être effectuée au moyen d'un fréquencemètre 24 qui compte le nombre de périodes du signal émis par l'oscillateur pendant un temps déterminé par une horloge interne.

Afin de déterminer avec précision la fréquence de l'oscillateur, il est nécessaire d'utiliser un oscillateur de grande stabilité à la fois thermique et mécanique. Ceci peut être réalisé en utilisant un oscillateur haute fréquence, c'est-à-dire dont la fréquence d'oscillation est au moins égale à 10 MHz.

Le dispositif et le procédé décrits précédemment permettent d'effectuer une mesure répétitive de l'énergie fournie par un laser impulsionnel. Afin de synchroniser les tirs laser avec la mesure de l'énergie correspondante, c'est-à-dire en fait avec les déterminations de la variation de la fréquence de l'oscillateur par le fréquencemètre, une photo-diode rapide 26 peut être prévue.

On a dit précédemment que, pour réaliser un dispositif fiable, il fallait que le coefficient de température de la constante diélectrique soit aussi stable que possible. En général, ce coefficient de température est porportionnel à $1/T^2$. Dans le cas ou celui-ci est peu stable, on peut toujours introduire une correction de température lors du traitement électronique au moyen d'un capteur de température permettant de calculer le temps correctif $1/T^2$.

Le dispositif et le procédé de l'invention permettent une mesure beaucoup plus rapide de l'énergie fournie notamment par un faisceau laser.

Comme dans le cas d'un capteur classique, il faut distinguer le temps de réponse propre du capteur, c'est-à-dire du matériau absorbant, et celui de l'électronique associée.

Le temps de réponse propre du capteur dépend tout d'abord du temps d'absorption des photons qui est quasiment instantané, c'est-à-dire inférieur à la picoseconde, puis du temps de conversion de l'excitation photonique en chaleur. Ce temps de conversion est de l'ordre de la picoseconde si l'absorption est rotationnelle ou vibrationnelle, c'est-à-dire située dans le domaine des hyperfréquences ou de l'infra-rouge; entre une fraction de nanoseconde et quelques microsecondes si l'absorption est électronique, c'est-à-dire située dans le visible ou l'ultra-violet. Cette limite supérieure de quelques microsecondes sera atteinte uniquement si les molécules du matériau absorbant présentent un état triplet de grande durée de vie, ce qui peut être évité par un choix correct de matériau.

De plus, le temps de réponse du capteur dépend du temps de diffusion de cette chaleur a l'ensemble du capteur. Ce temps est plus court que pour les dispositifs de l'art antérieur, étant donné que le convertisseur photo-thermique et le convertisseur thermo-électrique, constitués par le matériau absorbant, sont intimement mélangés au lieu d'être physiquement séparés; le convertisseur photo-thermique et le convertisseur thermo-électrique de l'art antérieur étaient respectivement la couche de matériau absorbant et la céramique pyroélectrique. Toutefois, un gradient de température est inévitable du fait de l'application de la loi de Beer-Lambert.

On rappelle que la loi de Beer-Lambert est régie par l'équation

$$\frac{dI}{I} = \mathcal{E}.dl,$$

I étant l'intensité du faisceau transmis par le matériau absorbant, $\varepsilon$

et d1 respectivement le coefficient d'absorption et, l'épaisseur irradiée dudit matériau. Des calculs permettent de démontrer qu'il existe un gradient d'échauffement proportionnel à $e$-ε.1. L'échauffement du matériau absorbant s'uniformise donc au bout d'un temps t égal à $L_m$. 6, $L_m$ étant la dimension moyenne du matériau (par exemple, rayon de la sphère de même volume) et 6 la vitesse du son dans le matériau (de l'ordre de 1000 m/s pour un liquide). En conséquence, un second temps d'homogénéisation de la température apparaîtra, ce temps étant proportionnel, pour le cas d'un matériau liquide, aux dimensions de la cellule contenant le liquide et inversement proportionnel à la vitesse du son dans le liquide. Ce temps peut être maintenu très inférieur à la microseconde, en utilisant une cellule de petite dimension et un liquide peu visqueux.

Par ailleurs, le temps réponse du capteur dépend du temps nécessaire pour que l'élévation de température du matériau influe sur l'orientation moyenne des dipôles de celui-ci. Ce temps est en particulier proportionnel au volume de la molécule polaire constituant le matériau et à la viscosité du liquide. Ceci nécessite donc de choisir un liquide peu visqueux et formé de petites molécules. Pour un matériau répondant à ces critères (voir plus loin), ce temps est de quelques dizaines de picosecondes.

En conséquence, le temps de réponse du matériau absorbant notamment liquide, résulte de la convolution de ces différents temps. Par un choix convenable du matériau (voir exemple donné ci-après), ce temps peut être de l'ordre de quelques dizaines de nanosecondes. Ce temps global représente le temps nécessaire pour que l'événement initial (absorption de photons) soit converti en un signal physique exploitable (mesure de la fréquence d'oscillation de l'oscillateur). Quant au temps d'acquisition de l'événement initial, celui-ci peut être inférieur à la picoseconde.

En ce qui concerne le temps de réponse de l'électronique associée, limitant en fait la fréquence de mesure, celui-ci est de l'ordre de la microseconde.

Le procédé de l'invention est donc au moins 10 mille fois plus rapide que le procédé classique de l'art antérieur dont on a vu qu'il était de 10 à 30 millisecondes:

Par ailleurs, l'absorption d'énergie se fait selon l'invention, dans tout le volume de la cellule et non seulement à la surface du capteur comme dans l'art antérieur. En conséquence, la densité, par unité de surface, tolérable est au moins 10 fois plus élevée en énergie et 100 fois plus élevée en puissance, du fait de meilleurs échanges thermiques, que celle tolérée par les capteurs classiques.

On va maintenant donner un exemple pratique de réalisation de l'invention. Le matériau correspondant aux différents critères donnés ci-dessus est du nitrobenzène.

Le nitrobenzène possède une constante diélectrique aux fréquences peu élevées de 35,74 à 20°C, présentant une variation de dε/ε. dT égale à 0,00225 à 20°C. Par ailleurs, le nitrobenzène possède des bandes d'absorption dans l'ultra-violet, dans l'infra-rouge et une absorption hyperfréquence liée à son temps de relaxation rotationnelle qui est de 47ps, c'est-à-dire à une fréguence de l'ordre de 3 GHz. Ce dernier type de bande d'absorption est très large.

Par dissolution de substances auxiliaires adéquates on peut réaliser à toute longueur d'onde une solution ayant une densité optique au moins égale à 1, c'est-à-dire absorbant au moins 90% de l'énergie incidente, compte tenu du parcours optique du faisceau laser dans le liquide capteur. D'une façon générale, les cyanines, les porphyrimes sont solubles dans les solvants considérés sans interaction gênante, et peuvent être choisis pour absorber dans tout le domaine ultraviolet-visible choisi.

Il est à noter que l'on peut toujours doubler le parcours optique du faisceau par réflexion après un premier passage à travers la cellule contenant le liquide.

Dans un cas pratique de mesure, la cellule contient une masse m de 0,3 g de nitrobenzène dont la chaleur spécifique $C_v$ est de l'ordre de 2 J/g. °K.

Si E est l'énergie du faisceau laser absorbée par le matériau, exprimée en joule, l'échauffement instantané de celui-ci est donné par l'équation $\Delta T = E/m. C_v$.

En remplaçant m et $C_v$ par leur valeur on obtient $\Delta T = 1,66 E (K/J)$

Comme $d ε/ε = 0,00225 \Delta T$ on en déduit que $dε/ε = 0,0375 E(J^{-1})$

Par ailleurs, la sensibilité du dispositif de l'invention, correspondant à la variation minimale de la constante diélectrique mesurable, est liée au temps de la mesure t par l'équation

$d ε/ε. t = 10^{-10}s$ on en déduit, en éliminant $\Delta ε/ε$ entre les deux dernières equations, que $E. t = 10^{-8}J/s$.

Le dispositif de l'invention est donc caractérisé par un facteur de mérite égal à la sensibilité obtenue en énergie pour un temps de mesure donné.

Il est à noter que la sensibilité du dispositif de l'invention est 10 mille fois plus grande que celle des dispositifs de l'art antérieur et que par conséquent le facteur de merite du dispositif est 10 mille fois plus grand gue celui des dispositifs de l'art antérieur.

Comme autre matériau correspondant aux critères donnés ci-dessus on peut citer le pentafluoronitrobenzène. Ce composé présentant des caractéristiques similaires à celles du nitrobenzène permet notamment d'augmenter la puissance tolérable par le dispositif. Cette puissance tolérable est fonction de l'ionisation du matériau sous l'effet du champ électrique du laser. Dans le cas du pentafluoronitrobenzène, le seuil d'ionisation est beaucoup plus élevé que celui du nitrobenzène.

Bien entendu ceci n'est qu'un exemple de réalisation de l'invention. Comme on l'a déjà dit précédemment, les dérivés nitrés ou halogénés non symétriques des alcanes, ayant au moins trois atomes de carbone, ou des hydrocarbures aromatiques ainsi que les hétérocycles non symétriques oxygénés et azotés, les amines tertiaires et les cétones, dont les carbones en α sont substitues par des radicaux alkyle, peuvent être utilisés.

## Revendications

1. Procédé de mesure de l'énergie contenue dans un faisceau de particules, consistant à envoyer ce faisceau de particules (12) sur un matériau (16) présentant un moment dipolaire électrique élevé, ce matériau (16) étant capable d'absorber l'énergie fournie par ce faisceau de particules (12), l'interaction dudit faisceau et du matériau conduisant à une élévation de température du matériau, proportionnelle à l'énergie absorbée, caractérisé en ce que l'on place le matériau (16), présentant des dipôles pouvant s'orienter librement, entre les deux armatures d'un condensateur d'accord en fréquence (20) d'un oscillateur (22) et en ce que l'on mesure la variation de la fréquence oscillateur, cette variation de la fréquence étant proportionnelle à la variation de la constante diélectrique du matériau lors de l'interaction du faisceau de particules et du matériau la durée d'une mesure de l'énergie étant une microseconde.

2. Procédé de mesure selon la revendication 1, caractérisé en ce que le matériau (16) est un matériau dont la température peut varier de 4 à 300°K.

3. Procédé de mesure selon l'une quelconque des revendications 1 et 2, caractérisé en ce que le matériau (16) est un fluide, ledit fluide étant alors contenu dans une cellule (18).

4. Procédé de mesure selon la revendication 3, caractérisé en ce que le fluide est un liquide.

5. Procédé de mesure selon la revendication 4, caractérisé en ce que le liquide n'est ni polymérisable ni tautomérisable.

6. Procédé de mesure selon la revendication 5, caractérisé en ce que le liquide n'est pas susceptible de former des liaisons hydrogène.

7. Procédé de mesure selon les revendications 5 et 6, caractérisé en ce que le matériau est choisi dans le groupe comprenant les dérivés nitrés ou halogénés non symétriques des alcanes, ayant au moins trois atomes de carbone, ou des hydrocarbures aromatiques, les composés hétérocycliques non symétriques oxygénés ou azotés, les amines tertiaires et les cétones dont les carbones en α sont substitués par des radicaux alkyle.

8. Procédé de mesure selon l'une quelconque des revendications 1 à 7, caractérisé en ce que le matériau est choisi dans le groupe comprenant le nitrobenzène, le pentafluoronitrobenzène.

9. Procédé de mesure selon l'une quelconque des revendications 1 à 8, caractérisé en ce que le matériau (16) est formé d'une pluralité de substances n'interagissant pas entre elles et dont les domaines d'absorption d'énergie sont complémentaires.

10. Dispositif permettant la mesure de l'énergie fournie par un faisceau de particules, comprenant un matériau (16) présentant un moment dipolaire élevé, ce matériau étant capable d'absorber l'énergie fournie par le faisceau de particules (12), l'interaction dudit faisceau et du matériau conduisant à une élévation de température du matériau, proportionnelle à l'énergie absorbée, caractérisé en ce qu'il comprend un condensateur d'accord en fréquence (20) d'un oscillateur (22) comportant deux armatures entre lesquelles est placé le matériau (16), celui-ci présentant des dipôles pouvant s'orienter librement, et des moyens (24) permettant de mesurer la variation de la fréquence d'oscillation dudit oscillateur qui est proportionnelle à la variation de la constante diélectrique du matériau (16) lors de l'interaction du faisceau de particules et dudit matériau, la durée d'une mesure de l'énergie étant une microseconde.

11. Dispositif de mesure selon la revendication 10, caractérisé en ce que l'oscillateur est un oscillateur haute fréquence.

12. Dispositif de mesure selon la revendication 10 ou 11 pour mesurer de façon répétitive l'énergie fournie par un laser impulsionnel, caractérisé en ce qu'il comprend des moyens (26) pour synchroniser les impulsions laser avec la mesure de l'énergie contenue dans ces impulsions.

## Patentansprüche

1. Verfahren zum Messen der Energie, die in einem Partikelstrahl enthalten ist, enthaltend: Senden des Partikelstrahls (12) auf ein Material (16), das ein erhöhtes elektrisches Dipolmoment aufweist, wobei dieses Material (16) in der Lage ist, die von dem Partikelstrahl (12) gelieferte Energie zu absorbieren, wobei die Wechselwirkung des Strahls und des Materials zu einer Temperaturerhöhung des Materials rührt, die proportional zur absorbierten Energie, ist dadurch gekennzeichnet, daß man das Material (16), das Dipole aufweist, die sich frei orientieren können, zwischen den zwei Platten eines Frequenzabstimmkondensators (20) eines Oszillators (22) anbringt und daß man die Frequenzänderung der Schwingung dieses Oszillatots mißt, Hobei diese Frequenzänderup6 proportional der Änderung der Dielektrizitätskonstante des Materials aufgrund der Wechselwirkung des Partikelstrahls und des Materials ist, wobei die Dauer einer Energiemessung eine Mikrosekunde ist.

2. Meßverfahren nach Angpruch 1, dadurch gekennzeichnet, daß das Material (16) ein Material ist, dessen Temperatur zwischen 4 und 300° K variieren kann.

3. Meßverrahren nach einem der Ansprüche 1 und 2, dadurch gekennzeichnet, daß das Material (16) ein Fluid ist, wobei das genannte Fluid in einer Zelle (18) enthalten ist.

4. Meßverfahren nach Anspruch 3, dadurch gekennzeichnet, daß das Fluid eine Flüssigkeit ist.

5. Meßverfahren nach Anspruch 4, dadurch gekennzeichnet, daß die Flüssigkeit weder polymerisierbar noch tautomerisierbar ist.

6. Meßverfahren nach Anspruch 5, daßurch gekennzeichnet, daß die Flüssißkeit nicht dazu geeignet ist Wasserstoffbindungen zu bilden.

7. Meßverfahren nach den Ansprüchen 5 und 6, dadurch gekennzeichnet, daß das Material aus der Gruppe ausgewählt ist, enthaltend: die unsymmetrischen, nitrierten oder halogenierten Derivate der Alkane, die wenigstens drei Rohlenstoffatome haben, oder der aromatischen Kohlenwasserstoffe, die unsymmetrischen, sauerstoffhaltigen oder stickstoffhaltigen Verbindungen, die tertiären Amine und die Ketone, deren $\alpha$-Kohlenstoffatome durch Alkylradikale substituiert sind.

8. Meßverfahren nach einem der Ansprüche 1 bis 7, dadurch gekennzeichnet, daß das Material aus der Gruppe gewählt ist, die Nitrobenzen und Pentafluornitrobenzen enthält.

9. Meßverfahren nach einem der Ansprüche 1 bis 8, dadurch gekennzeichnet, daß das Material (16) aus einer Mehrzahl von Substanzen gebildet ist, die untereinander nicht reagieren und deren Energieabsorptionsbereiche komplementär sind.

10. Vorrichtung zum Messen der Energie, die von einem Partikelstrahl Belierert wird, enthaltend ein Material (16), das ein erhöhtes Dipolmoment aufweist, wobei dieses Material in der Lage ist, die von dem Partikelstrahl (12) gelieferte Energie zu absorbieren, wobei die Wechselwirkung zwischen dem Strahl und dem Material zu einer Temperaturerhöhung des Materials führt, die proportional der absorbierten Energie ist, dadurch gekennzeichnet, daß sie einen Frequenzeinstellkondensator (20) eines Oszillators (22) enthält, der zwei Platten aufweist, zwischen welchen das Material (16) angeordnet ist, das Dipole aufweist, die sich frei orientieren können, und daß Einrichtungen (24) vorgesehen sind, die die Messung der Frequenzänderung der Schwingung des Oszillators erlauben, die proportional der Anderung der Dielektrizitätskonstante des Materials (16) aufgrund der Wechselwirkung des Partikelstrahls und des Materials ist, wobei die Dauer einer Energiemessung eine Mikrosekunde ist.

11. Meßvorrichtung nach Anspruch 10, dadurch gekennzeichnet, daß der Oszillator ein Hochfrequenzoszillator ist.

12. Meßvorrichtung nach Anspruch 10 oder 11 zur wiederholten Messung der von einem Impulslaser gelieferten Energie, dadurch gekennzeichnet, daß sie Einrichtungen (26) enthält, um die Laserimpulse mit der Messung der in diesen Impulsen enthaltenen Energie zu synchronisieren.

**Claims**

1. A process for measuring the energy of a particle beam, consisting of directing the particle beam (I2) onto a material (16) having an elevated electrical dipole moment, said material (16) being adapted to absorb the energy provided by the particle beam (12), interaction of said beam and material leading to an increase in the temperature of the material proportional to the energy absorbed, characterised in that the material, having freely-orientable dipoles, is located between the two plates of a frequency-tuned condenser (20) of an oscillator (22) and in that the variation in the oscillation frequency of said oscillator is measured, said variation in frequency being proportional to the variation in the dielectric constant of the material during interaction of the particle beam and material, the duration of one energy measurement being one microsecond.

2. Measurement process according to claim 1, characterised in that the material (16) is a material whose temperature is variable from 4 to 300°K.

3. Measurement process according to either of claims 1 and 2, characterised in that the material (16) is a fluid contained in a cell (18).

4. Measurement process according to claim 3 characterised in that the fluid is a liquid.

5. Measurement process according to claim 4 characterised in that the liquid is neither polymerisable nor tautomerisable.

6. Measurement process according to claim 5 characterised in that the liquid is not capable of forming hydrogen bonds.

7. Measurement process according to claims 5 and 6 characterised in that the material is selected from the group comprising asymmetrical nitro - or halo - derivatives of alkanes having at least 3 carbon atoms, or of aromatic hydrocarbons, asymmetrical O- or N- heterocyclic compounds, tertiary amines, and ketones having alkyl substituents on their $\alpha$- carbon atoms.

8. Measurement process according to any one of claims 1 to 7, characterised in that the material is selected from the group comprising nitrobenzene and pentafluoronitrobenzene.

9. Measurement process according to any one of claims 1 to 8 characterised in that the material (16) comprises a plurality of substances that do not interreact with one another, and which have complementary energy-absorption ranges.

10. Apparatus for the measurement of the energy of a particle beam, comprising a material (16) having an elevated dipole moment, said material being adapted to absorb the energy provided by the particle beam (12), interaction of said beam and material leading to an increase in the temperature of the material proportional to the energy absorbed, characterised in that it comprises a frequency-tuned condenser (20) of an oscillator (22) havlng two plates between which the material (16) is positioned, said material having freely-orientable dipoles, and means (24) for measuring the oscillation frequency of said oscillator which is proportional to the variation of the dielectric constant of the material (16) during interaction of the particle beam and material, the duration of one energy measurement being one microsecond.

11. Measure ment apparatus according to claim 10 characterised in that the oscillator is a highfrequency oscillator.

12. Measurement apparatus according to claim 10 or 11 for repetitive measurement of the energy provided by a pulsed laser, characterised in that it comprises means (26) for synchronising the laser pulses with the measurement of the energy of those pulses.

FIG. 1

FIG. 2

1